# EUROPÄISCHE PATENTSCHRIFT

(11) **EP 0 981 087 B1**
(45) Veröffentlichungstag und Bekanntmachung des Hinweises auf die Patenterteilung: **02.03.2005**
(21) Anmeldenummer: 99440217.0
(22) Anmeldetag: 29.07.1999
(51) Int. Cl.: G06F 9/46

(54) **Verfahren, Module und Vermittlungsstelle zum Kennzeichnen von Prozessen sowie von deren Daten und Betriebsmitteln**
Method, module and controller for registering processes as well as their data and resources
Procédé, module et commutateur pour l'identification des processus et leur données et ressources

(30) Priorität: 04.08.1998 DE 19835177
(43) Veröffentlichungstag der Anmeldung: 23.02.2000
(73) Patentinhaber: ALCATEL, 75008 Paris (FR)
(72) Erfinder: Willems Matthias, 71229 Leonberg (DE); Kunkel, Rolf, 71691 Freiberg (DE); Ongena, Luc, 2800 Mechelen (BE)
(74) Vertreter: Brose, Gerhard, Dipl.-Ing.

(56) Entgegenhaltungen:
- EP-A- 0 457 117
- EP-A- 0 750 257

## Beschreibung

Die Erfindung betrifft ein Verfahren zum Kennzeichnen von Prozessen, vorzugsweise Telekommunikationsprozessen, sowie von deren Betriebsmitteln, die jeweils mit einem diesen Prozeß eindeutig kennzeichnenden (ersten) Kennzeichner versehen werden, und betrifft ferner ein zur Durchführung dieses Verfahrens geeignetes Rechner-, Programm- oder Softwaremodul sowie eine Vermittlungsstelle mit einem solchen Modul.

Ein derartiges Verfahren ist beispielsweise aus der US 5,644,719 bekanntgeworden.

Bei quasi-gleichzeitiger Bearbeitung mehrerer Prozesse mit einem Rechner (multitasking) wird durch ein geeignetes, von einem Betriebssystem gesteuertes Verfahren die Bearbeitung von Prozessen in einem Rechner zeitlich so verschachtelt bzw. verzahnt, daß die Bearbeitung quasi-gleichzeitig erfolgt. Dazu erhält jeder Prozeß einen sogenannten Prozeß-Kennzeichner (engl.: process identifier (PID)), der in dem System nur einmal vergeben ist und daher den Prozeß eindeutig identifiziert. Auch Ressourcen wie Betriebsmittel, z.B. Stacks oder Speicherplatz, die einem Prozeß vom Betriebssystem zur Verfügung gestellt werden, oder auch Daten, werden mit dem jeweiligen Prozeß-Kennzeichner versehen, um ihre Zuordnung zum jeweiligen Prozeß zu kennzeichnen. Wenn ein Prozeß beendet ist, wird z.B. der Speicherplatz, in dem Daten des beendeten Prozesses abgelegt sind, unter Verwendung des Kennzeichners freigegeben.

Wenn ein Prozeß vorzeitig abgebrochen wird, d.h. nicht normal beendet wird, z.B. weil ein Fehler aufgetreten ist, wird ein neuer Prozeß gestartet, der diesen abgebrochenen Prozeß ersetzen soll. Allerdings kann der neue Prozeß, der einen neuen Prozeß-Kennzeichner erhält, auf die Daten des abgebrochenen Prozesses nicht zugreifen, da diese mit dem Prozeß-Kennzeichner des beendeten Prozesses gekennzeichnet sind. Wenn einer von mehreren miteinander gekoppelten Prozessen vorzeitig beendet wird, muß der diesen Prozeß fortsetzende neue Prozeß aufwendig mit den restlichen Prozessen synchronisiert werden. Und wenn ein Prozeß für eine längere Zeit nicht läuft, kann er nicht beendet werden, da sonst ein Zugriff auf seine Daten zu einem späteren Zeitpunkt nicht mehr möglich ist. Dies führt zu einem hohen Bedarf an Speicherplatz und damit an vorzusehenden Ressourcen.

Auch bei den in der US 5,644,719 beschriebenen vernetzten Computern weist das Betriebssystem Anwendungsprozessen, die vom Computer veranlaßt werden, Prozeß-Kennzeichnungen (PID) zu, die vom Betriebssystem bei der Übertragung von Nachrichten zwischen den Prozessen verwendet werden.

Ferner Offenbart EP 0750257 einen Prozeß sowie sein Betriebsmittel, die mit einem eindentigen Kennzeichnende Kennzeichner versehen werden.

Es ist daher die Aufgabe der Erfindung, sowohl ein Verfahren der eingangs genannten Art derart weiterzubilden, daß der einen beendeten Prozeß fortsetzende neue Prozeß weiterhin auf die Daten und Betriebsmittel des beendeten Prozesses zugreifen kann, als auch entsprechende Module und eine Vermittlungsstelle dafür zu schaffen.

Diese Aufgabe wird erfindungsgemäß dadurch gelöst, daß ein Prozeß und seine Betriebsmittel mit einem weiteren, den Prozeß eindeutig kennzeichnenden (zweiten) Kennzeichner versehen werden und daß nach vorzeitigem Beenden des Prozesses ein die Funktionen des beendeten Prozesses fortsetzender Prozeß gestartet wird, der als zweiten Kennzeichner den zweiten Kennzeichner des beendeten Prozesses erhält.

Erfindungsgemäß werden Betriebsmittel, z.B. Daten, zusätzlich zu dem von der Lebensdauer seines Prozesses abhängigen ersten Prozeß-Kennzeichner mit einem zweiten Kennzeichner gekennzeichnet, im folgenden als Referenz-Kennzeichner (engl. reference identifier (RID)) bezeichnet, der von der Lebensdauer des Prozesses unabhängig ist. So kann der fortsetzende neue Prozeß auf Betriebsmittel des beendeten Prozesses zugreifen. Der Referenz-Kennzeichner ermöglicht einen schnellen und sicheren Zugriff auf Daten eines beendeten Prozesses. Wenn einer von mehreren miteinander zeitlich gekoppelten Prozessen vorzeitig beendet wird, tritt der fortsetzende Prozeß ohne zeitliche Verzögerung an die Stelle des beendeten, so daß eine Synchronisation mit den übrigen Prozessen nicht erforderlich ist.

Ausgestattet mit dem erneut zugewiesenen Referenz-Kennzeichner des beendeten Prozesses nimmt der neue Prozeß die Funktionen des beendeten Prozesses wieder auf. Somit ermöglicht der Referenz-Kennzeichner eine Kommunikation auf Funktionsbasis und nicht, wie bei Benutztung nur des ersten Prozeß-Kennzeichners, auf Prozeßbasis. Das System gewinnt an Flexibilität.

Bei bevorzugten Ausgestaltungen der Erfindung sind die Referenz-Kennzeichner (RID) gegen Neustarten und/oder Neuladen eines Steuerelements gesichert, und werden mit ihnen insbesondere solche Prozesse, Daten und Betriebsmittel, die vom Neustart und Neuladen ihrer Steuereinheit abhängig sind, gekennzeichnet. Die sonst nach Neustart oder Neuladen der Steuereinheit erforderliche Prozeßsynchronisation kann entfallen.

Indem der Referenz-Kennzeichner erst dann freigegeben wird, wenn die Funktionen des zuerst mit diesem Referenz-Kennzeichner versehenen Prozesses durchgeführt ist, ist sichergestellt, daß die Funktionen auch erfolgreich durchgeführt werden.

Vorzugsweise werden die Referenz-Kennzeichner vom Betriebssystem verwaltet sowie auch von dort vergeben oder angefordert. Auch der die Funktionen des beendeten Prozesses fortsetzende Prozeß wird ebenfalls vom Betriebssystem angefordert.

In einer weiteren vorteilhaften Verfahrensausgestaltung ist vorgesehen, daß der Referenz-Kennzeichner gemeinsam mit anderen Daten in einem (prozeßspezifischen) Datenwort übertragen wird. Dies ermöglicht es, gleichzeitig Nachrichten gemeinsam mit den Referenz-Kennzeichnern zu übertragen. Besteht der einen Prozeß in einem Zielrechner kennzeichnende Referenz-Kennzeichner z.B. aus 32 Bits, so können bei der für solche Prozesse üblichen Datenstruktur von 48 Bits die restlichen 16 Bits zur Angabe des virtuellen Wegs (virtual path) zu diesem Zielrechner genutzt werden. Die Kommunikationssoftware kann dieses zweiteilige Datenwort dann entsprechend aufschlüsseln.

Die Referenz-Kennzeichner können in Tabellen, vorzugsweise in einer gemeinsamen Tabelle abgespeichert werden und entsprechend ihrer zeitlichen Rangfolge (Priorität) geordnet sein. Aus dieser Tabelle wird ein Referenz-Kennzeichner erst dann freigegeben, wenn seine Funktionen, gegebenenfalls durch nachfolgende Prozesse, durchgeführt worden sind.

In besonders bevorzugter Verfahrensausgestaltung wird ein gerade nicht benötigter Prozeß, insbesondere vom Betriebssystem, beendet ("schlafen gelegt") und bei Bedarf in einen diesen schlafen gelegten Prozeß fortführenden neuen Prozeß mit Hilfe des Referenz-Kennzeichners "wiedererweckt". Dadurch werden Ressourcen freigehalten, so daß bei gleichbleibender Anzahl von Betriebssystembetriebsmitteln (Process Control Blocks) erheblich mehr Prozesse (z.B. Faktor 15) verwaltet werden können.

Die Erfindung betrifft in einem weiteren Aspekt auch ein zur Durchführung des geschilderten Verfahrens geeignetes Rechner-, Programm- oder Softwaremodul sowie eine Vermittlungsstelle mit mindestens einem solchen Modul. Eine solche Vermittlungsstelle kann z.B. ein Knoten in einem Fernmeldenetz sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: schematisch zwei Prozesse, von denen der eine den anderen fortsetzt und die erfindungsgemäß denselben zweiten Kennzeichner erhalten; und
- Fig. 2: ein Ablaufdiagramm für ein das erfindungsgemäße Verfahren durchführendes Rechner-, Programm- oder Softwaremodul.

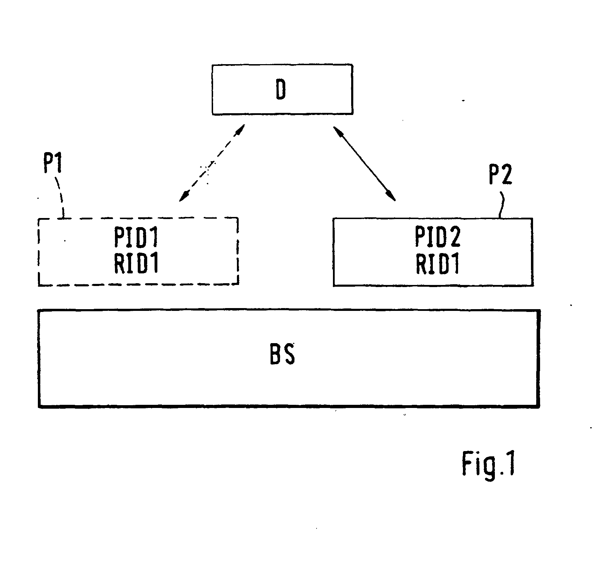

In Fig. 1 ist mit BS ein Betriebssystem bezeichnet, mit dem die Bearbeitung von Multitasking-Prozessen P1 gesteuert wird. Jeder Prozeß P1 erhält vom Betriebssytem BS einen ersten (Prozeß-)Kennzeichner PID1 und einen zweiten (Referenz)Kennzeichner RID1, die beide jeweils nur einmal vergeben werden, so daß durch jeden dieser beiden Kennzeichner der Prozeß P1 eindeutig identifiziert ist. Auch Ressourcen wie Betriebsmittel (Daten D), auf die der Prozeß P1 zugreift oder die von ihm erzeugt wurden, werden so gekennzeichnet.

Der Prozeß-Kennzeichner PID1 ist von der Lebensdauer seines Prozesses P1 abhängig und dient z.B. zum Verwalten von Prozeßbetriebsmitteln und zum Steuern von Datenbanktransaktionen. Neustarten und/oder Neuladen beenden den Prozeß P1 und die Lebensdauer dieses Kennzeichners.

Der Referenz-Kennzeichner RID1 ist von der Lebensdauer des Prozesses P1 unabhängig und existiert so lange, bis dessen Funktionen durchgeführt sind. Dieser Kennzeichner wird zum Verwalten von Neustart und/oder Neuladen abhängigen Prozeßdaten benutzt und bietet einer Anwendersoftware die Möglichkeit, mit einer Neustart und/oder Neuladen unabhängigen Prozeßkennung zu arbeiten.

Wenn der Prozeß P1 vorzeitig beendet wird, z.B. weil ein Fehler aufgetreten ist, wird ein die Funktionen des beendeten Prozesses P1 fortsetzender neuer Prozeß P2 gestartet, der als Refenz-Kennzeichner den Refenz-Kennzeichner RID1 des beendeten Prozesses P1 erhält. Über diesen Kennzeichner RID1 kann auch der neue Prozeß P2 auf die Betriebsmittel und Daten D des beendeten Prozesses P1 zugreifen und so dessen Funktionen fortsetzen. Erst wenn ein Prozeß zu einem normalen Ende kommt, wird der Referenz-Kennzeichner RID freigegeben.

Wenn auf dem Gebiet der Telekommunikation der Prozeß P1 z.B. einen Telefonanruf behandelt hat, könnten bei vorzeitigem Ende des Prozesses P1 seine Daten D noch zum Beenden des Telefonanrufs verwendet werden. Der neue Prozeß P2 kann die zum Telefonanruf gehörenden Daten D lesen, um den Anruf zu beenden, oder der neue Prozeß P2 ist der Empfänger von Nachrichten, die von anderen Prozessen noch an den beendeten Prozeß P1 gesandt werden. Der Referenz-Kennzeichner RID vereinfacht und beschleunigt die Neusynchronisation zusammengehöriger, verteilter Prozesse nach Neustart (Restart) oder Neuladen (Reload) einer, an der Steuerung eines Telefongesprächs, beteiligten Steuerungseinheiten. Weiterhin ermöglicht der Referenz-Kennzeichner RID, als Betriebssystemfunktion, einer Anwendungssoftware das Halten von stabilen Telefongesprächen über Neustart und/oder Neuladen einer Steuereinheit hinweg und das schnelle Auffinden von gesprächsrelevanten Daten, die in einer Datenbank gespeichert sind. D.h., der Zugriff auf gesprächsrelevante Daten ist auch nach Neustart und/oder Neuladen schnell und sicher möglich.

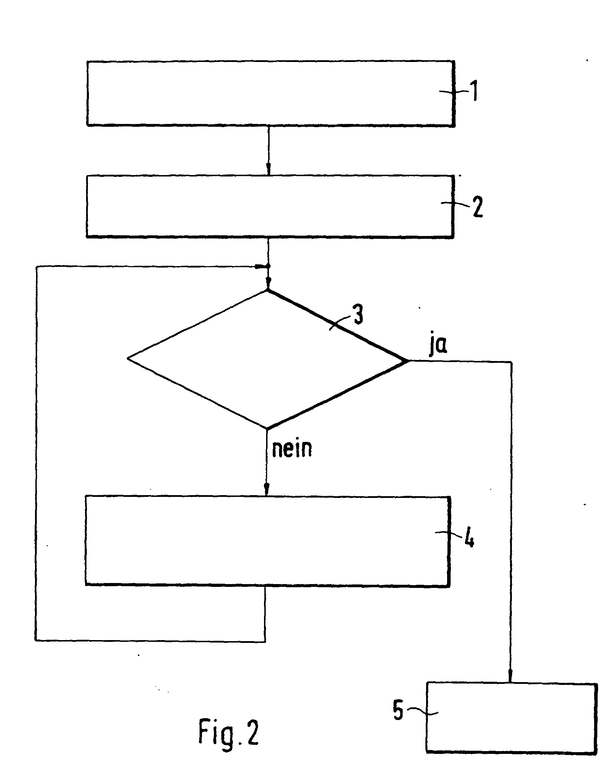

In Fig. 2 ist beispielhaft ein Ablaufdiagramm eines Rechnerprogramms für das oben beschriebene Verfahren dargestellt, In Schritt 1 wird der Prozeß P1 mit den beiden Kennzeichnern PID1 und RID1 versehen. Wenn in Schritt 2 festgestellt wird, daß der Prozeß P1 beendet ist, wird in Schritt 3 abgefragt, ob die Funktionen dieses Prozesses abgeschlossen sind. Wenn die Antwort "ja" ist, ist das Programm beendet (Schritt 5). Anderenfalls (Antwort "nein") wird in Schritt 4 ein neuer Prozeß P2 mit Kennzeichner RID1 gestartet. Dieser Prozeß P2 setzt den Prozeß P1 fort, um dessen noch ausstehende Funktionen durchzuführen. Wird auch dieser Prozeß P2 beendet, ohne daß alle Funktionen des Prozesses P1 durchgeführt sind, führt die negative Antwort im Schritt 3 zum Starten eines weiteren Prozesses, der ebenfalls RID1 als Kennzeichner enthält. Erst wenn alle Funktionen des Prozesses P1 durchgeführt sind, d.h., wenn die Antwort im Schritt 3 positiv ist, springt das Programm zum Ende (Schritt 5).

## Patentansprüche

1. Verfahren zum Kennzeichnen von Prozessen (P1) sowie von deren Betriebsmitteln, die jeweils mit einem diesen Prozeß (P1) eindeutig kennzeichnenden ersten Kennzeichner (PID1) versehen werden, **dadurch gekennzeichnet,**
**daß** ein Prozeß (P1) und seine Betriebsmittel mit einem weiteren, den Prozeß (P1) eindeutig kennzeichnenden zweiten Kennzeichner (RID1) versehen werden und daß nach vorzeitigem Beenden des Prozesses (P1) ein die Funktionen des beendeten Prozesses (P1) fortsetzender Prozeß (P2) gestartet wird, der als zweiten Kennzeichner den zweiten Kennzeichner (RID1) des beendeten Prozesses (P1) erhält.

2. Verfahren nach Anspruch 1, **dadurch gekennzeichnet, daß** die zweiten Kennzeichner gegen Neustarten und/oder Neuladen eines Steuerelements gesichert sind.

3. Verfahren nach Anspruch 1 oder 2, **dadurch gekennzeichnet, daß** der zweite Kennzeichner (RID1) erst dann freigegeben wird, wenn die Funktionen des zuerst mit diesem zweiten Kennzeichner versehenen Prozesses (P1) durchgeführt ist.

4. Verfahren nach einem der vorhergehenden Ansprüche, **dadurch gekennzeichnet, daß** die zweiten Kennzeichner vom Betriebssystem (BS) verwaltet werden.

5. Verfahren nach einem der vorhergehenden Ansprüche, **dadurch gekennzeichnet, daß** der zweite Kennzeichner (RID1) gemeinsam mit anderen Daten in einem Datenwort übertragen wird.

6. Verfahren nach einem der vorhergehenden Ansprüche, **dadurch gekennzeichnet, daß** die zweiten Kennzeichner in Tabellen abgespeichert werden.

7. Verfahren nach einem der vorhergehenden Ansprüche, **dadurch gekennzeichnet, daß** ein gerade nicht benötigter Prozeß vorzeitig beendet wird.

8. Verfahren nach einem der vorhergehenden Ansprüche, **dadurch gekennzeichnet, daß** die Prozesse Telekommunikationsprozesse sind.

9. Rechnermodul, Programmodul oder Softwaremodul mit Mitteln zur Duchführung des Verfahrens nach einem der Ansprüche 1 bis 8.

10. Vermittlungsstelle mit mindestens einem Rechnermodul, Programmodul oder Softwaremodul nach Anspruch 9.

## Claims

1. A method of identifying processes (P1), and of the resources therefor, which are each provided with a first identifier (PID1) which unambiguously identifies said process (P1),
**characterised in that**
a process (P1) and its resources are provided with a further identifier (RID1) which unambiguously identifies the process, and after the premature termination of the process (P1) a process (P2) is started which continues the functions of the terminated process (P1) and which receives the second identifier (RID1) of the terminated process (P1) as its second identifier.

2. A method according to claim 1, **characterised in that** the second identifier is protected against the restarting and/or reloading of a control module.

3. A method according to claim 1 or 2, **characterised in that** the second identifier (RID1) is not released until the functions of the process (P1) which is provided with said second identifier are performed.

4. A method according to any one of the preceding claims, **characterised in that** the second identifier is managed by the operating system (BS).

5. A method according to any one of the preceding claims, **characterised in that** the second identifier (RID1) is transmitted together with other data in a data element.

6. A method according to any one of the preceding claims, **characterised in that** the second identifiers are stored in tables.

7. A method according to any one of the preceding claims, **characterised in that** a process which is plainly not required is terminated prematurely.

8. A method according to any one of the preceding claims, **characterised in that** the processes are telecommunications processes.

9. A computer module, program module or software module comprising means for carrying out the method according to any one of claims 1 to 8.

10. A switching location comprising at least one computer module, program module or software module according to claim 9.

## Revendications

1. Procédé pour l'identification de processus (P1) et de leurs moyens d'exploitation, qui sont pourvus respectivement d'un identificateur (PIDI) identifiant clairement ce processus (P1),
**caractérisé en ce qu'**un processus (P1) et ses moyens d'exploitation sont pourvus d'un second identificateur (RID1) identifiant clairement le processus (P1) et **en ce que**, après la fin prématurée du processus (P1), on démarre un processus (P2) poursuivant les fonctions du processus (P1) achevé qui reçoit en tant que second identificateur le second identificateur (RID1) du processus (P1) achevé.

2. Procédé selon la revendication 1, **caractérisé en ce que** les seconds identificateurs sont protégés contre un redémarrage et/ou un rechargement d'un élément de commande.

3. Procédé selon la revendication 1 ou 2, **caractérisé en ce que** le second identificateur (RID1) n'est libéré qu'une fois que les fonctions du processus (P1) doté d'abord de ce second identificateur (P1) sont réalisées.

4. Procédé selon l'une quelconque des revendications précédentes, **caractérisé en ce que** les seconds identificateurs sont gérés par le système d'exploitation (BS).

5. Procédé selon l'une quelconque des revendications précédentes, **caractérisé en ce que** le second identificateur (RID1) est transmis conjointement avec d'autres données dans un mot de données.

6. Procédé selon l'une quelconque des revendications précédentes, **caractérisé en ce que** les seconds identificateurs sont mémorisés dans des tableaux.

7. Procédé selon l'une quelconque des revendications précédentes, **caractérisé en ce qu'**un processus précisément non utilisé est achevé de façon prématurée.

8. Procédé selon l'une quelconque des revendications précédentes, **caractérisé en ce que** les processus sont des processus de télécommunication.

9. Module d'ordinateur, module de programme ou module de logiciel avec des moyens pour la mise en oeuvre du procédé selon l'une quelconque des revendications 1 à 8.

10. Commutateur avec au moins un module d'ordinateur, un module de programme ou un module de logiciel selon la revendication 9.
